(19) Europäisches Patentamt
European Patent Office
Office européen des brevets

(11) **EP 4 760 374 A1**

(12) **EUROPEAN PATENT APPLICATION**

(43) Date of publication:
**17.06.2026 Bulletin 2026/25**

(21) Application number: **24218732.6**

(22) Date of filing: **10.12.2024**

(51) International Patent Classification (IPC):
**G02B 27/64** $^{(2006.01)}$    **H04N 23/68** $^{(2023.01)}$

(52) Cooperative Patent Classification (CPC):
**G02B 27/646; H04N 23/68; H04N 23/6812;**
**H04N 23/682; H04N 23/685; H04N 23/687;**
G03B 2205/0007; G03B 2205/0015

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Axis AB**
**223 69 Lund (SE)**

(72) Inventors:
• **Nilsson, Dennis**
**223 69 LUND (SE)**
• **Jonsson, Peter**
**223 69 LUND (SE)**

(74) Representative: **AWA Sweden AB**
**Matrosgatan 1**
**Box 5117**
**200 71 Malmö (SE)**

(54) **METHOD FOR CONTROLLING AN IMAGE STABILIZATION SYSTEM**

(57)    In an aspect there is provided a method for controlling an image stabilization, system of an image capturing device,

wherein the IS system comprises an optical image stabilization, OIS, system compensating for vibrational movement of the image capturing device based on a motion signal output by a motion sensor of the image capturing device, and

wherein the OIS system has at least a first control parameter with a value being adjustable to adapt a responsiveness of the OIS system to vibrational movement, the value being adjustable between a first value causing a lower responsiveness of the OIS system, and a second value causing a higher responsiveness of the OIS system;

the method comprising, while the OIS system is in an active state and performs OIS;

determining a signal-to-noise estimate for the motion signal; and

determining the value of the first control parameter based on the signal-to-noise estimate, comprising setting the first control parameter to the first value responsive to determining that the signal-to-noise estimate is in a lower range, and to the second value responsive to determining that the signal-to-noise estimate is in an upper range.

Fig. 3

**Description**

TECHNICAL FIELD

The present invention generally relates to a method for controlling an image stabilization (IS) system, an image capturing device and a computer program product for implementing such a method.

BACKGROUND

Image stabilization (IS) is used in cameras to reduce the impact of camera movement, notably vibrations, on captured image frames. For example, camera movement may result in a blurred image frame and/or, when capturing video, result in an unstable video (i.e., "frame-to-frame jitter") due to camera motion between video frames.

Where the camera is mounted to a supporting structure, such as a wall, a ceiling, a pole or other camera support (as often is the case in video surveillance applications) the camera vibrations may be caused by shaking of the camera and/or the supporting structure due to collision with another object, or exposure to other external forces such as wind. Where the camera is a hand-held, the camera vibrations may be due to an unsteady hand of the camera user.

Optical image stabilization (OIS) includes lens-based and sensor-based image stabilization. The basic principle in lens-based OIS is to actuate a movable lens element of the optical system of the camera to compensate for the camera vibrations. The OIS system may, based on a motion signal sensed by a motion sensor of the camera, such as a gyro, move the movable lens element to compensate for the vibrational motion to keep the image steady on the image sensor of the camera. In sensor-based OIS, instead of moving a movable lens element, the OIS system may actuate the image sensor based on the sensed motion. This approach is sometimes referred to as "sensor-based image stabilization" (SIS) and is in the present disclosure considered as a type of OIS.

A common feature of the above-mentioned OIS approaches is that they involve actuating a physical element (e.g., lens or sensor) with a certain inertia. Hence, actuating the movable element will take some time and therefore the compensation will typically lag the movement to some degree. To provide an effective stabilization, it is generally desirable to minimize lag. In addition to using sensitive motion sensors and high-speed actuators, this may typically be achieved by tuning the OIS system to be as responsive as possible to vibrations within a given frequency range.

SUMMARY

While a more aggressive tuning of the OIS system may provide a more responsive, and thus more effective, compensation for camera vibrations, it further tends to make the stabilization more sensitive to noise in the motion signal. This can in particular become an issue in presence of only small camera vibrations, or when the camera is stationary, as the OIS system then to a greater extent will respond to noise in the motion signal, than to an actual vibration of the camera. A straightforward approach to avoid this could be to simply deactivate the OIS system when only little or no vibrations are detected. However, as realized by the inventors, this approach may introduce an additional lag in the OIS, caused by the delay associated with bringing the OIS system from a deactivated to active state.

In view of the above, it is an object of the present invention to provide improved approaches for controlling an OIS system so as to enable compensation with both reduced lag and reduced sensitivity to noise. Further and alternative objects may be appreciated from the following.

According to a first aspect of the present invention, there is provided a method for controlling an image stabilization, IS, system of an image capturing device,

wherein the IS system comprises an optical image stabilization, OIS, system compensating for vibrational movement of the image capturing device based on a motion signal output by a motion sensor of the image capturing device, and wherein the OIS system has at least a first control parameter with a value being adjustable to adapt a responsiveness of the OIS system to vibrational movement, the value being adjustable between a first value causing a lower responsiveness of the OIS system, and a second value causing a higher responsiveness of the OIS system;
the method comprising, while the OIS system is in an active state and performs OIS;
determining a signal-to-noise estimate for the motion signal; and
determining the value of the first control parameter based on the signal-to-noise estimate, comprising setting the first control parameter to the first value responsive to determining that the signal-to-noise estimate is in a lower range, and to the second value responsive to determining that the signal-to-noise estimate is in an upper range.

The method of the first aspect addresses the above stated objects by providing an "always-on" OIS system with a responsiveness which may be dynamically adapted in dependence on a signal-to-noise estimate for / of the motion signal. By setting the first control parameter to the first value when the signal-to-noise estimate is in the lower range (indicating a relatively greater amount of noise in the motion signal), the responsiveness of the OIS system is lowered and hence becomes less sensitive to noise. In this case, the lower responsiveness of the OIS system is not expected to impair the effectiveness of the OIS since it may be assumed there is only a limited amount of camera vibrations (if any) to compensate for. Further, by setting the first control parameter to the second value when the signal-to-noise estimate is in the upper range (indicating a relatively greater amount of signal corresponding to an actual vibration in the motion signal), the responsiveness of the OIS system is increased and may hence respond more aggressively to the sensed motion. Moreover, by providing a "lower responsiveness state" (corresponding to the first control parameter being set to the first value), in which the OIS system is still active but only less responsive, the issue with delay associated with bringing the OIS system from a deactivated state to an active state (e.g., following a period of little or no sensed camera motions) may be avoided.

In the present disclosure, the term "signal-to-noise estimate" means a signal metric determined for the motion signal that estimates a relationship between signal and noise levels in the motion signal at a given instant. A convenient form of the signal-to-noise estimate is a signal-to-noise ratio (SNR).

The signal-to-noise estimate is a reliable and useful metric to base the adaptive responsiveness on. For instance, an SNR estimate equal or close to 1.0 likely means that the image capturing device (e.g., camera) is stationary or only vibrating little and that hence less aggressive compensation by the OIS system is needed. Conversely, an SNR estimate greater than 1.0 likely means that the image capturing device is vibrating more strongly, and that hence more aggressive compensation by the OIS system may be applied.

When reference herein is made to the signal-to-noise estimate of the motion signal, this is to be understood as a reference to a current signal-to-noise estimate of an obtained current time segment of the motion signal. Accordingly, the method may comprise:

   obtaining a current time segment of the motion signal,
   determining a current signal-to-noise estimate for the current time segment of the motion signal, and
   determining the value of the first control parameter (or when applicable the value of each control parameter of the set of control parameters, discussed below) based on the current signal-to-noise estimate.

These steps may be performed repeatedly over a time period during which the OIS system is in the active state. Accordingly, the method may comprise, for each time instant of a sequence of time instants:

   obtaining a current time segment of the motion signal, and
   determining a current signal-to-noise estimate for the current time segment of the motion signal,
   thereby determining a sequence of signal-to-noise estimates,
   wherein the method further comprises determining a sequence of values of the first control parameter (or when applicable the value of each control parameter of the set of control parameters, discussed below) based on the sequence of signal-to-noise estimates.

The signal-to-noise estimates and first control parameter (or set of control parameters) may thus be continually or sequentially updated as the motion signal varies over time.

In some embodiments, the signal-to-noise estimate is based on an estimated variance of the motion signal and a noise estimate for the motion signal. Where the signal-to-noise estimate is an SNR estimate, the SNR estimate may be determined as a ratio of the estimated variance of the motion signal to the noise estimate. In view of the above, the estimated variance of the motion signal may here refer to a current estimated variance of a current (obtained) time segment of the motion signal. The noise estimate may be a predetermined noise estimate for the motion signal. The noise estimate may be an estimated variance or an average of a time segment of the motion signal obtained while the image capturing device is stationary (i.e., not undergoing any motion). The steps of obtaining a (current) time segment of the motion signal, and determining a (current) signal-to-noise estimate based on the (current) time segment of the motion signal, may be performed during a video capturing operation (e.g., comprising capturing of a video sequence). The noise estimate may be (pre-)determined during a calibration phase of the method, performed prior to the video capturing operation.

In some embodiments, the signal-to-noise estimate is based on a signal level of the motion signal and a noise estimate (i.e., a noise level estimate). Where the signal-to-noise estimate is an SNR estimate, the SNR estimate may be determined as a ratio of the signal level and the noise estimate. The signal level may be an average signal power estimate of the motion signal (e.g., of a current time segment of the motion signal). The noise level estimate may analogous to the above discussion be a predetermined noise estimate for the motion signal, e.g., determined as an average signal level (e.g., an average signal power) of a time segment of the motion signal obtained while the image capturing device is stationary (i.e., not undergoing any motion).

In some embodiments, determining the value of the first control parameter further comprises setting the first control parameter to an intermediate value between the first and second values responsive to determining that the signal-to-noise estimate is in an intermediate range, between the lower and upper ranges. This enables the responsiveness of the OIS system to be adapted in a gradual manner, in dependence on the signal-to-noise estimate, between the lower and higher degrees of responsiveness corresponding to the first and second values.

In some embodiments, determining that the signal-to-noise estimate is:

in the lower range comprises determining that the signal-to-noise estimate is smaller than a first threshold,
in the upper range comprises determining that the signal-to-noise estimate is greater than a second threshold greater than the first threshold, and
in the intermediate range comprises determining that the signal-to-noise estimate is between the first and second threshold. The responsiveness of the OIS system may thus be adapted based on a threshold comparison involving two thresholds. This provides a reliable and simple decision logic for controlling the OIS system based on the signal-to-noise estimate.

In some embodiments, the first value is smaller than the second value and the intermediate value is an increasing function of the signal-to-noise estimate, or wherein the first value is greater than the second value and the intermediate value is a decreasing function of the signal-to-noise estimate. The intermediate value may hence be gradually varied between the first and second values, in dependence on the signal-to-noise estimate for the motion signal. The function may in particular corresponding to an interpolation (e.g., linear interpolation) between the first and second values.

In some embodiments, determining that the signal-to-noise estimate is:

in the lower range comprises determining that the signal-to-noise estimate is smaller than a threshold, and
in the upper range comprises determining that the signal-to-noise estimate is greater than the threshold, and
wherein determining the value of the first control parameter further comprises, subsequent to determining that the signal-to-noise estimate is greater than the threshold, setting the first control parameter to the second value, and in response to the signal-to-noise estimate subsequently being smaller than the threshold, adjusting the value of the first control parameter towards the first value at a finite release rate.

The adaption of the responsiveness of the OIS system may thus be controlled according to an attack-release (also known as attack-decay) approach. That is, the value of the first control parameter may be set to the second value responsive to the signal-to-noise estimate exceeding the threshold. The value of the first control parameter may subsequently be gradually adjusted towards the first value after the signal-to-noise estimate again becomes less than the threshold. This provides a more gradual transition from the higher to the lower responsiveness state.

Optionally, this approach may be supplemented with a "sustain" period. That is, Subsequent to determining that the signal-to-noise estimate is greater than the threshold, and setting the first control parameter to the second value, keeping the first control parameter set to the second value for a predetermined minimum duration ("sustain period"), and in response to the signal-to-noise estimate, after the predetermined minimum duration has passed, being smaller than the threshold, adjusting the value of the first control parameter towards the first value at a finite release rate. Abrupt switching between back-and-forth between the lower and higher responsiveness states (e.g., due to the signal-to-noise estimate varying about the threshold), which may result in some degree of jerkiness of the compensation, may be mitigated.

In some embodiments, the motion signal indicates an angular rate of a rotational motion of the image capturing device.

The motion signal may thus be obtained from a sensor capable of detecting a rotational motion as an angular rate of the image capturing device/motion sensor. Vibrational motion of the image capturing device due to shaking tends to produce a greater variation in orientation/angle than in linear position of the image capturing device. Hence, controlling the OIS system based on an angular rate signal, and controlling the responsiveness of the OIS system based on the signal-to-noise estimate of the angular rate signal, may enable both an effective OIS and a reliable adaption of the responsiveness of the OIS system.

In some embodiments, the motion sensor comprises a gyro. A gyro may provide a motion signal indicating a rotational motion with a relatively low noise.

In some embodiments, the OIS system comprises a filter stage arranged upstream a controller of the OIS system and configured to filter the motion signal output by the motion sensor, and the first control parameter is a control parameter for the filter stage.

The motion signal may thus be filtered prior to being input to the controller of the OIS system. By controlling the filtering (e.g., in terms of filtering strength and/or cut-off frequency) applied to the motion signal, the frequency content of the motion signal received by the controller may be varied such that the responsiveness of the OIS system may be increased or reduced.

In some embodiments, the motion signal indicates an angular rate of a rotational motion of the image capturing device, and the filter stage comprises a leaky integrator, wherein the first control parameter is a rate of leak of the leaky integrator.

An integrator allows the motion signal output by the motion sensor (e.g., a gyro) that indicates an angular rate, to be converted to an "orientation signal" indicating an instantaneous orientation (i.e., an angle with respect to a sensing axis of the motion sensor) of the image capturing device. The controller of the OIS system may thus determine a compensation amount to apply at each instant based on the instantaneous orientation indicated by the orientation signal. Using specifically a leaky integrator, accumulation of noise in the integrated motion signal over time may be avoided. The first value of the first control parameter may be a lower leak rate and the second value of the second control parameter may be a higher leak rate.

In some embodiments, the filter stage comprises a low pass filter, and the first control parameter is a filter coefficient of the low pass filter. Adapting the filter coefficient of the low pass filter allows a strength and/or cut-off frequency of the low pass filter to be adapted, thereby controlling the suppression of high frequency components in the motion signal. The low pass filter may be arranged subsequent to the above-mentioned leaky integrator mentioned above, wherein the low pass filter may filter the integrated motion signal output by the leaky integrator. The low pass filter may also be arranged prior to the leaky integrator, wherein the low pass filter may filter the motion signal and output a low pass filtered motion signal to the leaky integrator.

In some embodiments, the OIS system comprises a controller configured to compensate for vibrational movement of the image capturing device by controlling a position of a movable element of the OIS system based on the motion signal, wherein the first control parameter is a control parameter of the controller.

The first control parameter may thus control a responsiveness of the controller, thereby adapting the speed and amount of the actuation of the movable element of the OIS system. The movable element may be a movable optical element, such as a lens, of the OIS system. The movable element may also be the image sensor of the image capturing device, the image sensor thus being a movable image sensor.

In some embodiments, the controller is a PID controller and the first control parameter adapts a P-term, an I-term, or a D-term of the PID controller. The P-, I- and D-terms each allow the responsiveness of the OIS system to be controlled. Conventionally, the PID parameters are statically configured to tune the control loop of the OIS system to obtain a desired response based on the motion signal. In contrast, in accordance with the present embodiments, the responds of the control loop may be dynamically adapted in dependence on the signal-to-noise estimate of the motion signal. In particular, the first control parameter may be the P-, I- or D-term. However, the first control parameter may also be a control parameter on which either of the P-, I- or D-term depends. As a specific example, the first control parameter may be a filter coefficient of a low pass filter of the PID controller configured to filter the D-term.

In some embodiments, the first control parameter is a control parameter of a set of control parameters of the OIS system, further comprising at least a second control parameter, wherein each control parameter of the set of control parameters has a respective value being adjustable to adapt the responsiveness of the OIS system to vibrational movement, the respective value being adjustable between a respective first value causing a lower responsiveness of the OIS system, and a respective second value causing a higher responsiveness of the OIS system; wherein the method comprises: for each control parameter of the set of control parameters, determining the value of the respective control parameter based on the signal-to-noise estimate, comprising setting the respective control parameter to the respective first value responsive to determining that the signal-to-noise estimate is in a respective lower range, and to the respective second value responsive to determining that the signal-to-noise estimate is in a respective upper range.

Thus, the responsiveness of the OIS system may be dynamically adapted based on a signal-to-noise estimate for the motion signal by independently adapting a respective value of at least a first and second control parameter based on the signal-to-noise estimate of the motion signal. This enables a greater and more precise control of the responsiveness of the OIS system.

In some embodiments, the set of control parameters comprises at least the following control parameters:

a rate of leak of a leaky integrator of a filter stage of the OIS system arranged upstream a controller of the OIS system and configured to filter the gyro signal, and
one or more of a P-term, an I-term, a D-term of a PID controller of the OIS system, advantageously at least the P-term.

This amounts to an effective combination of control parameters for dynamically adapting the responsiveness of the OIS system.

The set of control parameters may additionally comprise a filter coefficient of a low pass filter of the filter stage. This may provide an even more fine-grained control, in combination with the further control parameters of the above-mentioned set of control parameters.

In some embodiments, the method further comprises:

obtaining a time-series of samples of the motion signal (e.g., angular rate samples of the motion signal output by a gyro), and

determining a signal-to-noise estimate for the time-series of samples.

The method may further comprise, sequentially:

updating the time-series of samples with a new sample of the motion signal,
determining an updated signal-to-noise estimate for the updated time-series of samples, and
determining the value of the first control parameter (or when applicable the value of each control parameter of the set of control parameters) based on the updated signal-to-noise estimate.

The signal-to-noise estimate and first control parameter, or set of control parameters, may thus be continually or sequentially updated over time as new samples of the motion signals are obtained, while the OIS system is in the active state and performs OIS.

According to a second aspect, there is provided an image capturing device comprising:

a motion sensor configured to output a motion signal;
an optical image stabilization, OIS, system configured to compensate for vibrational movement of the image capturing device based on the motion signal,
wherein the OIS system has at least a first control parameter with a value being adjustable to adapt a responsiveness of the OIS system to vibrational movement, the value being adjustable between a first value causing a lower responsiveness of the OIS system, and a second value causing a higher responsiveness of the OIS system; and
a processing device configured to implement the method of the first aspect or any embodiments thereof.

According to a third aspect, there is provided a non-transitory computer program product comprising computer program code portions configured to perform the method of the first aspect or any embodiments thereof, when executed by a processing device.

In general, any embodiment, feature, effect or advantage discussed in connection with the first aspect applies correspondingly to the second and third aspects.

BRIEF DESCRIPTION OF THE DRAWINGS

The above, as well as additional objects, aspects, embodiments, features and effects of the present disclosure, may be better understood through the following illustrative and non-limiting detailed description, with reference to the appended drawings. In the drawings like reference numerals will be used for like elements unless stated otherwise.

Fig. 1 is a block diagram of an image capturing device according to an implementation.
Fig. 2 is a block diagram of an image capturing device according to a further implementation.
Fig. 3 shows in further detail a block diagram of an OIS system in accordance with an implementation.
Fig. 4 is a flow chart of a method for controlling an OIS system.
Fig. 5 is a schematic diagrammatic depiction of an example approach of determining a value of a first control parameter.
Fig. 6 is a schematic diagrammatic depiction of a further example approach of determining a value of a first control parameter.
Fig. 7a-b is a schematic diagrammatic depiction of a further example approach of determining a value of a first control parameter.

DETAILED DESCRIPTION

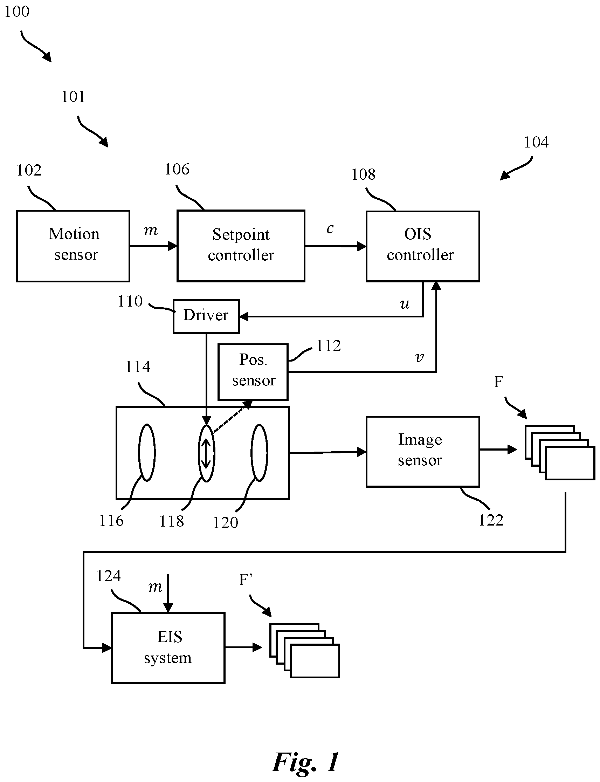

Fig. 1 is a schematic block diagram of an image capturing device 100. The image capturing device 100 may be a camera capable of capturing still images and/or video. For instance, a useful application for the image stabilization approaches of the present disclosure is an image capturing device 100 in the form of a monitoring or surveillance camera with video-capturing capability, for instance a networked surveillance camera (e.g., an Internet Protocol (IP) camera). As such, the image capturing device 100 may be adapted for a fixed installation, e.g., by being mounted to a supporting structure such as a building structure (e.g., a wall, a ceiling, a roof, a lighting pole, a mast, etc.), or other suitable structure, to monitor a scene. However, the image stabilization approaches of the present disclosure are applicable also to image capturing devices suitable for hand-held or body-worn image capture and/or for mounting on a camera tripod. For conciseness, the image capturing device 100 may in the following be referred to as camera 100, without loss of generality.

The camera 100 comprises an optical system 114 and an image sensor 122. The optical system 114 comprises a system of optical elements, such as one or more lenses 116, 118, 120. The number of optical elements shown in Fig. 1 is merely a non-limiting example and both fewer and greater number of lenses and/or other optical elements are also possible. During an image capturing operation, the camera 100 may monitor a scene by capturing, using the image sensor 122, images or frames F imaged onto the image sensor 122 by the optical system 114, thereby providing a sequence of images or frames F of the scene. In the case of a video capturing operation, the image frames F may be captured at a predetermined or variable frame rate suitable for the given monitoring application. The sequence of image frames F may in particular form image frames of a video sequence of the scene. The captured image frames may be provided to a downstream image processing pipeline to be subjected to typical image processing operations prior to transmission and/or storage, such as demosaicing, encoding, etc. These examples of post-processing operations may each be of a type which per se are known in the art and will therefore not be further discussed herein.

As discussed above, motion of the camera 100, such as vibrational motion due to shaking of the camera 100 during an image capturing operation, may impair the quality of individual image frames, as well as of a sequence of image frames of a video. To compensate for such camera motion, the camera 100 comprises an image stabilization (IS) system 101 implementing, at least, optical image stabilization (OIS), as set out in the following.

The camera 100 comprises a motion sensor 102 configured to output a motion signal m. The motion signal m indicates an instantaneous motion of the motion sensor 102 and thus of the camera 100. The camera 100 comprises an OIS system 104 configured to compensate for motion of the camera 100 based on the motion signal m. The OIS system 104 comprises a setpoint controller 106, an OIS controller 108, a driver 110 and a movable element. In the illustrated example, the OIS system 104 is configured for lens-based OIS wherein the movable element is a movable optical element of the optical system 114, here exemplified by the lens 118 being a movable lens. As may be appreciated, the movable element may however also be formed by a group of movable lenses of the optical system 114, or some other optical element. The setpoint controller 106 is configured to determine a control signal c in the form of a setpoint for the OIS controller 108. The setpoint controller may also be referred to as a setpoint generator or block. The setpoint controller 106 is described in further detail below. The OIS controller 108 is configured to, responsive to the control signal / setpoint $c$, control a position of the movable lens 118. The OIS controller 108 is configured to generate, based on the setpoint c, an actuation signal $u$ for causing the driver 110 to actuate the movable lens 118. The driver 110 is accordingly configured to actuate the movable lens 118 in accordance with the actuation signal $u$, thereby compensating for vibrational motion of the camera 100.

The driver 110 may for instance comprise one or more voice coil motor (VCM) actuators, or other suitable conventional high-speed actuators, such as comb drives or piezo actuators. The OIS system 104 may typically be capable of compensating for motion along a set of axes of compensation axes, such as two or more. The driver 110 may accordingly comprise, for each compensation axis of the OIS system 104, a respective actuator (e.g., VCM) for actuating the movable lens 118 to provide compensation along the compensation axis. The driver 110 may for example comprise actuators (e.g., VCMs) for shifting a position of the movable lens 118. The position may here refer to a location (i.e., linear position) and/or a rotation (i.e., angle/tilt of the lens/lenses). For instance, the driver 110 may comprise actuators for translating the movable lens 118 in a plane transverse to an optical axis of the optical system 114. The driver 110 may additionally or alternatively comprise actuators for rotating the movable lens 118 relative the optical axis. For instance, the OIS system 104 may be configured to move the movable lens 118 along two transverse directions in the plane. The OIS system 104 may thereby compensate for changes in pitch and yaw (defined below) of the camera 100. Also other approaches for controlling the position of the movable lens 118 are possible, such as by moving the movable lens 118 along a curved path (e.g., parabolic) to simultaneously achieve a varying location and angle of the movable lens 118. These are however merely a few examples, and other approaches for actuating a movable lens or other movable optical element are also possible.

The motion sensor 102 may be any type of sensor capable of sensing motion with respect to (e.g., about or along) at least one sensing axis and output a motion signal m indicating the sensed motion for each sensing axis. The motion sensor 102 may be configured to sense motion along each of the set of compensation axes of the OIS system 104. Conveniently, the motion sensor 102 may comprise a corresponding set of sensing axes and be arranged such that the set of sensing axes align with the set of compensation axes. Thus, the motion sensor 102 may output a motion signal $m$ indicating an instantaneous value of a respective motion component corresponding to each compensation axis.

The motion sensor 102 may be configured to sense rotational motion and/or linear motion and output a motion signal $m$ indicating the sensed rotational and/or linear motion. The motion sensor 102 may comprise one or more gyros, one or more accelerometers, or other suitable types of inertial measurement units (IMU). The term "gyro" and "accelerometer" as used herein may refer to gyros and accelerometers having one or more sensing axes. For instance, a "single" gyro or accelerometer may on a physical / hardware level comprise a number of individual gyro or accelerometer sensors, respectively, each configured to sense motion along a respective sensing axis. Thus, a "2-axis gyro" may in practice comprise two individual gyro sensors, each configured to sense an angular rate about a respective axis (e.g., pitch and yaw). Similarly, a "3-axis accelerometer" may comprise three individual acceleration sensors, each configured to sense acceleration along a respective axis (e.g., three orthogonal axes with a fixed orientation with respect to the camera 100). Where more than one sensor and/or type of sensing technologies are used, data fusion may be used to combine the individual motion signals from each sensor into a motion signal m indicating motion for one or more sensing axes of the motion sensor 102.

For example, the motion sensor 102 may be configured to sense rotational motion as an angular rate (i.e., a rate of change of orientation / rotation) of the camera 100 / motion sensor 102 and output a corresponding motion signal $m$ indicating the sensed angular rate. The motion sensor 102 may be configured to sense an angular rate along one or more axes, such as pitch, yaw and/or roll. Pitch may here be used to refer to a pitch angle of the optical axis (i.e., viewing direction) of the camera 100 in a vertical plane. Yaw may refer to a yaw angle of the optical axis of the camera 100 in a horizontal plane. Roll may here refer to a roll angle of the camera 100 about its optical axis. An angular rate may conveniently be sensed using a gyro. For example, a 2-axis gyro may be configured to sense angular rates of pitch and yaw angles of the camera 100. A 3-axis gyro may be configured to sense angular rates of pitch, yaw and roll angles of the camera 100. Rotational motion may also be sensed using a pair of sensing axes of a 2-axis (or greater) accelerometer. The accelerations sensed along the pair of sensing axis may be fused (e.g., integrated and converted by a trigonometric transform) into a scalar value representing an angular rate about an axis orthogonal to the pair of sensing axes. The conversion may be performed by an on-sensor computational block of the motion sensor 102, or by an off-sensor computational block of the camera 100. More generally, any sensor configuration (e.g., a gyro and/or accelerometer) allowing sensing of a rotational motion may be used. For instance, a motion sensor 102 combining a gyro and an accelerometer may use the gyro for sensing rotational motion about a first sensing axis and the accelerometer for sensing rotational motion about a second sensing axis.

As discussed above, vibrational motion tends to produce a greater variation in rotation than in linear translation of the camera 100. Thus, having the motion sensor 102 configured to sense at least rotational motion may allow a more sensitive sensing of vibrational movement, and thus a more effective image stabilization. The description will hence in the following mainly refer to implementations of an OIS system compensating for motion based on a motion signal indicating rotational motion (e.g., angular rate). However, the following discussion may also be applied in a corresponding manner to implementations of an OIS system compensating for motion based on a motion signal indicating linear motion (e.g., linear motion rate or linear acceleration).

Regardless of the specific implementation of the motion sensor 102, the motion sensor 102 may be configured to output the motion signal $m$ as a digital motion signal or an analog motion signal. Where the motion sensor 102 outputs an analog motion signal m it may be sampled by an analog-to-digital converter (ADC) of the camera 100 arranged upstream the OIS system 104 and connected to an analog output of the motion sensor 102. Thus, the analog motion signal may be AD converted into a digital signal comprising (e.g., for each component) a time-series of motion values (i.e., "motion samples") to be provided as input to the OIS system 104. Where the motion sensor 102 outputs a digital motion signal m the motion sensor 102 may comprise an internal ADC and thus perform AD conversion of an internal analog motion signal prior to being output via a digital output of the motion sensor 102. Thus, the motion signal $m$ may be output as a digital signal, comprising (e.g., for each component) a time-series of motion values (i.e., "motion samples") to be provided as input to the OIS system 104.

In the illustrated example, the setpoint controller 106 is shown to directly receive the motion signal m from the motion sensor 102. However, the motion signal m may typically be subjected to AD conversion (where the motion sensor 102 comprises an analog output) and/or filtering (e.g., by a filtering stage comprising integration and/or low-pass filtering of the motion signal $m$) prior to being received by the setpoint controller 106.

In the illustrated example, the OIS controller 108 of the OIS system 104 is implemented as a closed-loop controller. Thus, the OIS system 104 further comprises a position sensor 112 configured to sense an instantaneous position of the movable lens 118 (e.g., a linear position and/or an angle/tilt of the lens/lenses) and provide a corresponding position signal $v$ as feedback signal to the OIS controller 108. Thus, the position sensor 112 may be arranged in a feedback path of the OIS controller 108 and configured to output a feedback signal indicating a position of the movable lens 118. The position sensor 112 may for instance comprise a Hall effect sensor, e.g., one for measuring the position of the movable lens 118 along each respective compensation axis. An alternative to a Hall effect sensor is an optical sensor, or a giant magnetoresistance-effect (GMR-effect) sensor.

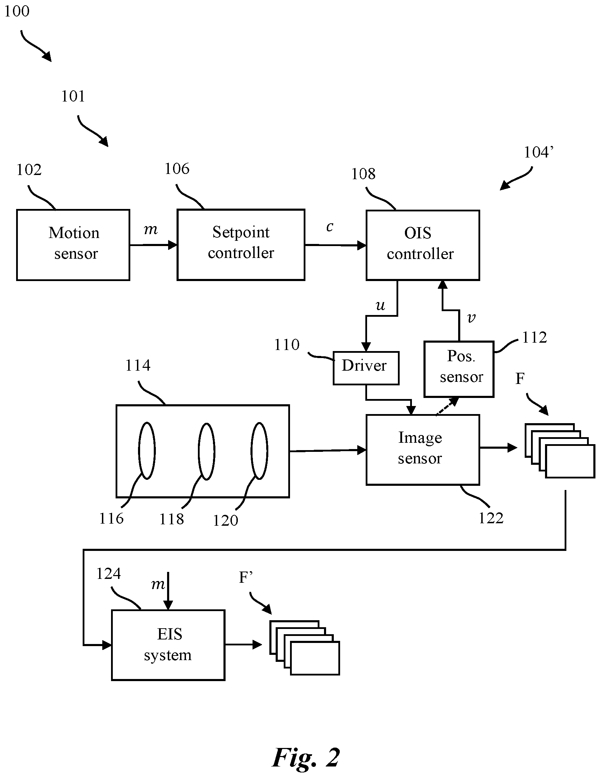

Fig. 2 is a block diagram of an alternative implementation of the image capturing device 100 comprising, instead of a lens-based OIS system 104 as in Fig. 1, a sensor-based OIS system 104'. Thus, the OIS system 104' of Fig. 2 is configured to provide OIS by controlling a position of the image sensor 122. The driver 110 of the OIS system 104' may in analogy with the driver 110 of the OIS system 104 of Fig. 1 be implemented using a set of actuators such as VCM actuators, for controlling a position of the image sensor 122 in an imaging plane and/or a tilting angle of the image senor 122. The OIS system 104' may further implement a closed-loop control and comprise a position sensor 112 (e.g., realized by Hall sensors and/or optical sensors) to provide a position signal $v$ indicating an instantaneous position of the image sensor 122 as feedback signal to the OIS controller 108. The discussion of Fig. 1 otherwise applies correspondingly to Fig. 2 and reference is thus made to the above for a discussion of correspondingly numbered elements, to avoid undue repetition.

While here for simplicity shown as alternative implementations, it is also possible to implement OIS using a combination of lens-based and sensor-based OIS. For example, a movable optical element (e.g., corresponding to the movable lens 118 of Fig. 1) and the image sensor 122 may be arranged in a common camera module, wherein OIS may be realized by controlling a position and/or angle of the camera module, i.e., as a single unit.

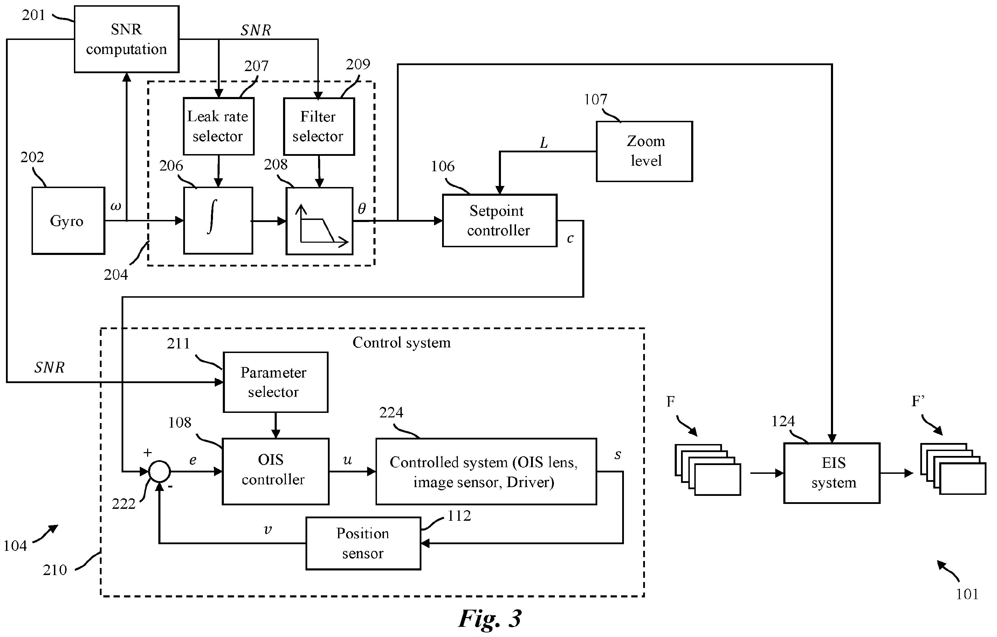

Fig. 3 shows in further detail a block diagram of the IS system 101, with particular focus on the OIS system 104. While the Fig. 3 shows a lens-based OIS system 104 corresponding to Fig. 1, the discussion applies correspondingly to image sensor-based OIS as shown in Fig. 2, as well as a combined lens- and sensor-based OIS.

Without loss of generality, the OIS system 104 of Fig. 3 will be described with reference to a motion sensor 202 implemented by a gyro. Reference will further be made to a single sensing and compensation axis, e.g. pitch or yaw. Thus, for the purpose of the following discussion, the motion sensor 202 is assumed to output a motion signal $\omega$ indicating an angular rate of change of an orientation of the motion sensor 202 about its sensing axis (e.g., the rate of change of the pitch or yaw).

The OIS system 104 comprises a closed-loop control system 210 comprising the OIS controller 108. The OIS controller 108 may be implemented by a PID controller. In principle, a simpler implementation of the OIS controller 108 is also possible, such as a PI controller. However, given the fast response typically required for effective OIS, it is typically beneficial to use each of the P-, I- and D-components.

The P-, I- and D-components each represents a control parameter controlling a responsiveness of the OIS system 104 to vibrational movement of the camera 100. As further described below, one or more of the P-, I- and D-components may in accordance with the present disclosure be adjusted during the active state of the OIS system 104 to adapt the responsiveness of the OIS system 104. The specific values of the respective first and second values of each of the P-, I- and D-components may be determined as part of tuning of the control loop, and will generally be design choices made in view of factors such as the amount of noise in the motion signal $\omega$, the desired responsiveness of the OIS system 104, etc. at different levels of SNR in the motion signal $\omega$.

Block 224 represents the controlled system of the control system 210 and may with reference to Fig. 1 represent the movable lens 118 and the driver 110 actuating the movable lens 118. In case of an image sensor-based OIS like the OIS system 104' of Fig. 2, the block 224 may instead represent the image sensor 122 and the driver 110 actuating the image sensor 110. The controlled parameter (i.e., the process variable) of the control system 210 is the position of the movable element and is denoted $s$. The position is as discussed above measured by the position sensor 110 (e.g., a Hall sensor) and provided as feedback signal $v$. The feedback signal $v$ is subtracted from the setpoint c received from the setpoint controller 106, to generate an error signal e for the OIS controller 108.

A general description of operations performed by the OIS system 104 to perform OIS during an active state is provided in the below, with reference to Fig. 3. Where the camera 100 is a video camera these operations may in particular be performed during capturing of a video sequence of video frames F.

During the active state, the OIS system 104 sequentially obtains a time-series of samples of the motion signal $\omega$ (i.e., "angular rate samples" or "motion samples") from the motion sensor 202. For convenience, it will in the following be assumed that the motion signal $\omega$ is a digital motion signal, and accordingly, the motion samples and the motion signal may be referred to using the same label $\omega$. If needed for ease of explanation, a motion sample $\omega$ obtained at a given time instant $t = t_i$ may in the following be denoted $\omega(t_i)$. Correspondingly, a time-series of motion samples $\omega$ available to the OIS system 104 at a given time instant $t = t_i$ may be denoted $\omega(t_i)$. The time-series of motion samples $\omega(t_i)$ available to the OIS system 104 at a given time instant $t = t_i$ corresponds to a current time segment the motion signal $\omega$ for the time instant $t_i$, where $i$ is an integer index for the given time instant such that $t_i = i * \Delta_t$ where $\Delta_t$ is the sampling interval of the motion signal / motion samples $\omega$ and $t_0$ is an arbitrary reference point in time. The term "sampling interval" (interchangeably "sampling period") is in the present disclosure used in the normal sense of the word to refer to the time interval or time period between sampling instants, i.e., the inverse of the sampling rate. The sampling rate of the samples $\omega$ (e.g., the sampling rate of the gyro) may for example lie in a range from a few kHz up to 10 kHz, or higher.

The time-series of samples $\omega$ may optionally be stored in a buffer (not individually shown) of the OIS system 104. The buffer may for example be implemented as a first-in-first-out (FIFO) buffer. Thus, assuming the buffer has been filled with a time-series of samples $\omega(t_{i-1})$ at time instant $t_{i-1}$, upon obtaining a new sample $\omega(t_i)$ at time instant $t_i$, the time-series $\omega(t_{i-1})$ may be updated with the new sample $\omega(t_i)$ by discarding an oldest (first) sample $\omega$ of the time-series $\omega(t_{i-1})$ and the new sample $\omega(t_i)$ may be appended as a newest (last) sample $\omega(t_i)$ to the remaining samples of the time-series $\omega(t_{i-1})$ to form an updated/current time series of motion samples $\omega(t_i)$. The length of the buffer and time series $\omega(t_i)$ may be denoted $T$ samples, and may for exampled span a time period of a few tenths of a second, 1 second, or more. As a non-limiting example the length may be 0.5 seconds, corresponding to 4096 samples sampled at 8 kHz.

The motion samples $\omega$ obtained by the OIS system 104 are in turn passed through a filtering stage 204 arranged upstream the setpoint controller 106. The filtering stage 204 comprises an integrator 206 and a low-pass filter 208 integrating and filtering, respectively, the motion / angular rate samples $\omega$ over time to produce a time-series of orientation samples. The time-series of orientation samples output by the filter stage 204 may in the following be denoted $\theta$ while individual orientation samples ("angular samples") may be denoted $\theta$. Analogous to the discussion of the motion samples $\omega$, an orientation sample derived from a motion sample $\omega(t_i)$ obtained at a given time instant $t = t_i$ may be denoted $\theta(t_i)$. Correspondingly, a time-series of orientation samples $\theta$ available to the OIS system 104 at a given time instant $t = t_i$ may be denoted $\theta(t_i)$. The orientation samples output by the integrator 206 (i.e., the input to the low-pass filter 208) may be denoted

$\theta$'.

To reduce sensitivity to noise in the motion signal $\omega$ the integrator 206 is implemented as a leaky integrator. Thus, the integrator 206 may compute an updated orientation/angular sample $\theta$'(t) for time instant $t = t_{i+1} = t_i + \Delta_t$ according to:

$$\theta'(t_i + \Delta_t) = C * (\theta'(t_i) + \omega(t_i + \Delta_t) * \Delta_t)$$

$$(\text{Eq. 1})$$

where $\Delta_t$ is the sampling interval of the motion signal $\omega$, and $C$ is a "leaky" integration amount, $C = 1 - R_{leak}$ where $R_{leak}$ is the rate of leak of the leaky integrator 206. The rate of leak $R_{leak}$ may typically be set to a value close 0, corresponding to an integration amount $C$ close to but slightly less than 1.0, as a non-limiting example. The rate of leak $R_{leak}$ (or equivalently the integration amount $C$) represents a control parameter controlling a responsiveness of the OIS system 104 to vibrational movement of the camera 100. As further described below, the rate of leak $R_{leak}$ may in accordance with the present disclosure be adjusted during the active state to adapt the responsiveness of the OIS system 104.

The low-pass filter 208 may in turn apply low-pass filtering to the orientation samples $\theta$' output by the integrator 206, to further suppress noise and thus reduce the noise sensitivity. The low-pass filter 208 may for instance be implemented as a first-order recursive low-pass filter, e.g.,

$$\theta(t_i + \Delta_t) = \alpha * \theta'(t_i + \Delta_t) + (1 - \alpha) * \theta(t_i)$$

$$(\text{Eq. 2})$$

where $\alpha$ is a filter coefficient or filter parameter of the low-pass filter 208. The filter coefficient $\alpha$ influences the cut-off frequency and strength of the low-pass filter 208 and is represents a further control parameter controlling a responsiveness of the OIS system 104 to vibrational movement of the camera 100. As further described below, the filter coefficient $\alpha$ (or, in case of other low-pass filter implementations) may thus in accordance with the present disclosure, like the integration amount $C$, be adjusted during the active state to adapt the responsiveness of the OIS system 104.

It is to be noted that while the low-pass filter 208 here is exemplified as a first-order recursive filter, other implementations are equally possible, for instance other infinite impulse response (IIR) filters such as a second- or higher-order recursive low-pass filter, or low-pass finite impulse response (FIR) filters. Further, while the low-pass filter 208 is here shown as a post-processing step to the integration 206, low-pass filtering may alternatively, or additionally, be performed prior to the integration 206. It is further possible to omit the low-pass filter 208, wherein the output $\theta$(t) of the filtering stage 204 becomes equal to the output $\theta$'(t) of the integrator 206 as given by Eq. 1.

The setpoint controller 106 is arranged downstream the filtering stage 204 to sequentially obtain orientation samples $\theta$ (e.g., integrated and typically low-pass filtered) of the time-series of orientation samples $\theta$ output by the filter stage 204. The setpoint controller 106 may optionally include an internal buffer (not individual shown), for instance implemented by a FIFO buffer. For the purpose of present discussion, it may be assumed that the setpoint controller 106 obtains orientation samples $\theta$ at the same sampling rate as the motion samples $\omega$ are obtained from the motion sensor 202. However, it is also possible to configure the setpoint controller 106 to obtain orientation samples $\theta$ from the filtering stage 204 at a lower rate, such as a fraction (e.g.., ½ or ¼) of the sampling rate of the motion signal $\omega$. In general, the sampling rate of the setpoint controller 106 may depend on factors such as the amount of memory available for buffering orientation samples $\theta$, the rate at which the setpoint c is to be updated for the control loop of the OIS system 104 to provide a desired response, the processing speed of processor circuitry implementing the setpoint controller 106, etc.

A change between a pair of successive samples $\theta$ of the time-series $\theta$ (e.g., $\theta(t_{i-1})$ and $\theta(t_i)$ indicates the angular displacement of the camera 100 (i.e., about the sensing axis of the motion sensor 202) between $t_{i-1}$ and $t_i$. Thus, responsive to obtaining a sample $\theta$ (e.g., a new/updated/next sample $\theta$), the setpoint controller 106 determines, based on the obtained sample $\theta$, an updated setpoint (e.g., a new/updated/next setpoint) forming the control signal c for the OIS system 104. Various implementations of the setpoint controller 106 are possible. For example, the setpoint controller 106 may implement an angle-to-position function, to transform the obtained sample $\theta$, which in the present example is an angle, into a corresponding position value for the movable element, e.g., the movable lens 118 or the image sensor 122. More specifically, the angle-to-position function may map the sample $\theta$ (which represents the instantaneous orientation of the camera 100) to a setpoint c representing a position of the movable element. The specific form of the angle-to-position function may depend on the design of the OIS system, the location of the movable element (e.g., lens 118 or image sensor 122) relative the pivot point of the angular displacement indicated by the sample $\theta$, the geometric relationship between the sensing axis and the compensation axis, etc. Suitable approaches for converting an angular displacement measured by a motion sensor (e.g., a gyro), to a linear position of a movable compensation element as measured by a position sensor (e.g., a Hall sensor), as part of a OIS system, are per se known in the art and may accordingly be implemented by the setpoint controller 106.

The amount of compensation (i.e., the required translation of the movable element of the OIS system 104) that needs to be applied responsive to a given change in orientation of the camera 100 is further dependent on the focal length of the optical system (e.g., optical system 114) of the camera. Therefore, in case the optical system has a zoom lens, the angle-to-position function may further take into account a current zoom level $L$ of the optical system. The current zoom level $L$ may as shown in Fig. 3 be provided by a zoom level block 107. For a computationally efficient implementation, the setpoint controller 106 may retrieve a gain value from a predetermined look-up-table (e.g., stored in a memory of the OIS system 104) associating each of a number of zoom level entries with a predetermined gain value. The retrieved gain value may be the predetermined gain value associated with the zoom level entry corresponding to (e.g., closest to) the current zoom level L. The setpoint controller 106 may accordingly multiply the position value given by the angle-to-position function with the retrieved gain value. The result may be output as the next setpoint $c$ to the control system 210 comprising the OIS controller 108.

While in the above example, the setpoint c is determined by applying an angle-to-position function to an orientation sample $\theta$ obtained from the filtering stage 204, more elaborate implementations of the setpoint controller 106 are also possible. For instance, the setpoint controller 106 may implement a Kalman filter or other predictive filter in order to estimate a next orientation sample $\theta(t_{i+1})$. The estimated orientation sample $\theta(t_{i+1})$ may subsequently be transformed using an angle-to-position function as discussed above, wherein the transformed value may be output as the setpoint $c$. It is also possible to first apply an angle-to-position function to an obtained sample $\theta$ and then apply the predictive filter to the transformed sample to determine the setpoint $c$.

The setpoint $c$ input to the control system 210 is as shown in Fig. 3 summed with the inverted position signal $v$ (the negative of the position signal $v$, i.e., $-v$) output by the position sensor 112 to generate an error $e$ representing the tracking error of the control system 210. More specifically, the error $e$ represents the tracking error in terms of position of the movable element. The error e forms the input to the OIS controller 108, which in response generates the actuation signal $u$ for causing the driver (e.g., the driver 110) to actuate the movable element of the controlled system 224 (e.g., lens 118 or sensor 122). For example, where the OIS controller 108 is a PID controller the actuation signal $u$ may be determined as the sum of the P-, I- and D-components based on the error e. Any other suitable conventional approach for generating an actuation signal u based on an error e in a closed-loop controller may be used.

In the above example, the setpoint controller 106 performs an angle-to-position transform to determine the setpoint c in terms of a setpoint of a position of the movable element. However, other implementations are also possible. For instance, the setpoint controller 106 may alternatively be configured to output the setpoint c in the angular domain of the orientation samples $\theta$. Further, an angle-to-position block may alternatively be provided in the feedback path of the closed-loop control system 210, transforming the position value $v$ output by the position sensor 112 into a corresponding angle. The error signal e input to the OIS controller 108 will in this case represent the tracking error of the control system 210 in an angular domain. The OIS controller 108 may accordingly implement an angle-to-position transform to generate the actuation signal $u$.

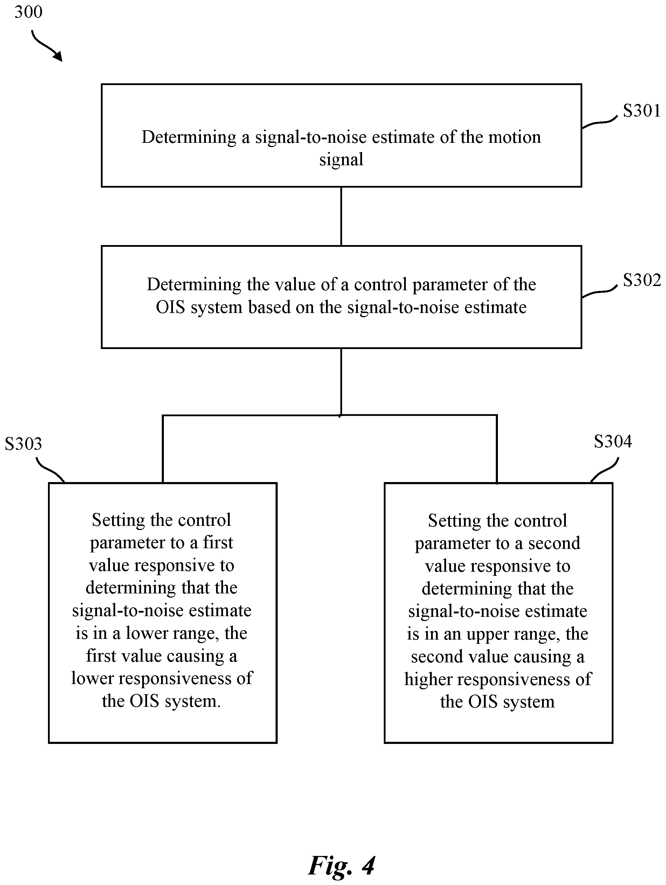

As mentioned above, while a more aggressive tuning of the OIS system 104 may provide a more responsive, and thus more effective, compensation for camera vibrations, it further tends to make the stabilization more sensitive to noise in the motion signal $\omega$. Further, simply deactivating the OIS system 104 when only little or no vibrations are detected may result in a delayed OIS in connection with bringing the OIS system 104 from its deactivated to its active state. In the following, implementations of a method 300 for controlling the OIS system 104, addressing these issues will be disclosed with further reference to the flow chart of Fig. 4. It is to be noted that the steps of the method 300 described in the following are performed while the OIS system 104 is active, and thus actively performs OIS to compensate for vibrational motion of the camera 100 based on the motion signal $\omega$.

As further shown in Fig. 3, the OIS system 104 comprises an SNR computation block 201 (hereinafter interchangeably "SNR block 201"). At step S301, the SNR block 201 determines a signal metric in the form of a signal-to-noise estimate for the motion signal $\omega$. The SNR block 201 determines a current signal-to-noise estimate $SN(t_i) = SN_i$ of a current time segment of the motion signal $\omega$ obtained by / available to the OIS system 104 at each of a sequence of time instants $t_i$, thereby determining, over time, a sequence of signal-to-noise estimates. Thus, for each given time instant $t_i$ of a sequence of time instants, the SNR block 201 determines a current instantaneous signal-to-noise estimate $SN_i$ for the given time instant $t_i$. The time segment obtained by the OIS system 104 at each given time instant $t_i$ corresponds in the illustrated implementation to the time-series of motion samples $\omega(t_i)$ available to (e.g., stored in the above-mentioned buffer) at given the time instant $t_i$. Thus, as new motion samples $\omega$ are obtained at $t_i, t_{i+1}, t_{i+2}, ...$, the SNR block 201 may determine an updated current signal-to-noise estimate $SN_i, SN_{i+1}, SN_{i+2}, ...$, based on $\omega(t_i), \omega(t_{i+1}), \omega(t_{i+2}), ...$, respectively.

In the illustrated example, the SNR block 201 is configured to determine the signal-to-noise estimate $SN_i$ as an estimated SNR of the motion signal $\omega$ (i.e., $SN_i = SNR_i$).

An SNR estimate $SNR_i$ may be determined in various manners. The SNR estimate may be determined as a ratio of an estimated variance $V(t_i) = V_i$ of the current time-series of motion samples $\omega(t_i)$ to a noise estimate $\sigma^2$ of the motion signal, e.g.,

$$SNR_i = V_i/\sigma^2$$

(Eq. 3)

The noise estimate $\sigma^2$ may be a predetermined noise estimate for the motion signal $\omega$. The noise estimate $\sigma^2$ may for example be an estimated variance computed in an analogous manner to the variance $V_i$ of the time-series $\omega(t_i)$ however based on a time-series of motion samples $\omega(t_{-1})$ obtained at a time instant $t_{-1}$ of a calibration phase. More specifically, the time-series $\omega(t_{-1})$ may correspond to a time-series of motion samples obtained while the camera 100 is stationary, such that the motion signal $\omega$ may be assumed to include only noise of the motion sensor 202 (e.g., gyro noise). The noise estimate $\sigma^2$ may in this case be (pre-)determined as part of the method, however during the calibration phase performed prior to initiating the video capturing operation and performing step S301. The noise estimate $\sigma^2$ may also be obtained in other ways, for instance by manually entering a predetermined sensor noise estimate (e.g., as indicated on a product sheet for the motion sensor 202) during design and configuration of the OIS system 104 before deployment.

An SNR estimate $SNR_i$ may also be determined as a ratio of a signal level of the current time-series of motion samples $\omega(t_i)$ to a noise level estimate of the motion signal $\omega$. The signal level may for example be an average signal power estimate of the current time-series of motion samples $\omega(t_i)$, for instance determined as the summed squared magnitude of the samples of the current time-series of motion samples $\omega(t_i)$. The noise level estimate may here be a (average) noise power estimate determined in a corresponding manner, e.g., during a calibration phase as mentioned above.

In either case, the SNR estimate may be determined in linear scale or logarithmic scale. Further, also other technically equivalent approaches for estimating an SNR may also be used. Moreover, instead of determining an SNR estimate, a signal-to-noise estimate may also be estimated in other ways. For instance, as a difference (e.g., absolute valued) between the variance $V_i$ of the time-series $\omega(t_i)$ and the noise estimate $\sigma^2$, a difference or ratio between a signal level of the time-series $\omega(t_i)$ and the noise estimate $\sigma^2$.

At step S302, the method 300 proceeds to determine, based on the signal-to-noise estimate (i.e., in the illustrated example the SNR estimate $SNR_i$), a value of at least a first control parameter controlling / influencing a responsiveness of the OIS system 104 to vibrational motion of the camera 100, i.e., as indicated by the motion signal $\omega$ output by the motion sensor 202.

As mentioned above, the OIS system 104 comprises a set of control parameters whose value / setting influences the responsiveness of the OIS system 104. In the illustrated example, the set of control parameters include:

- the rate of leak $R_{leak}$ (or equivalently the integration amount $C$) of the leaky integrator 206 of the filter stage 204,
- the filter coefficient $\alpha$ of the low-pass filter 208 of the filter stage 204,
- the P-term, the I-term, and/or the D-term of the OIS controller 108 of the control system 210, and
- where the OIS controller 108 has a D-term, a filter coefficient of a low pass filter of the OIS controller 108 configured to filter the D-term.

For each of these parameters, the respective value may be adjusted between a respective first value causing a lower responsiveness of the OIS system 104, and a respective second value causing a higher responsiveness of the OIS system 104.

The rate of leak $R_{leak}$:
A higher rate of leak $R_{leak}$ (equivalent to a smaller integration amount $C$) provides a stronger suppression of noise (e.g., more temporal smoothing), and hence a lower responsiveness of the OIS system 104 to changes in the motion signal $\omega$. Conversely, a lower rate of leak $R_{leak}$ (equivalent to a greater integration amount C) provides a lower suppression of noise (e.g., less temporal smoothing), and hence a higher responsiveness of the OIS system 104 to changes in the motion signal $\omega$. Hence, decreasing the rate of leak $R_{leak}$ from a first value $R_{leak,1}$ to a second value $R_{leak,2} < R_{leak,1}$ may cause the responsiveness of the OIS system 104 to be increased (assuming any further parameter of the set is held fixed during the increase). As an example, $R_{leak,1} = 0.01$ and $R_{leak,2} = 0.0001$ (corresponding to increasing the integration amount from a first value $C_1 = 0.99$ to a second value $C_1 = 0.9999$). While this may be considered a representative example of first and second values of the leak of rate $R_{leak}$, it is to be noted that the specific values is a design choice made in view of factors such as the amount of noise in the motion signal $\omega$, the desired responsiveness of the OIS system 104, for different signal-to-noise estimates, etc.

The value of the rate of leak $R_{leak}$ may as shown in Fig. 3 be determined by a leak rate selector block 207, responsive to the signal-to-noise estimate $SNR_i$ output by the SNR computation block 201.

The filter coefficient $\alpha$:
A higher value of the filter coefficient $\alpha$ provides a less strong suppression of high frequencies, and a higher cut-off frequency, in the integrated output samples $\theta'$ from the integrator 206 (or in the motion signal / motion samples $\omega$ if the low-pass filter 208 is arranged prior to the integrator 206). This causes a higher responsiveness of the OIS system 104 to changes in the motion signal $\omega$. Conversely, a lower value of the filter coefficient $\alpha$ provides a stronger suppression of high frequencies, and a lower cut-off frequency, and thus causes a lower responsiveness of the OIS system 104. Hence, increasing the filter coefficient $\alpha$ from a first value $\alpha_1$ to a second value $\alpha_2 > \alpha_1$ may cause the responsiveness of the OIS system 104 to be increased (assuming any further parameter of the set is held fixed during the increase). As a non-limiting example, $\alpha_1 = 0.2$ and $\alpha_2 = 1.0$ (corresponding to the low-pass filter 208 being deactivated, i.e., not applying any filtering to the input signal). While discussed with reference to the example filter coefficient $\alpha$ of a first-order recursive low-pass filter, a corresponding relationship may apply also to filter coefficients of other implementations of the low-pass filter 208, such as of a corresponding filter coefficient $\alpha$ of a second- or higher-order recursive low-pass filter, other IIR filters or FIR filters. Thus, the low-pass filter 208 may more generally comprise at least one filter parameter which be adjusted to adapt a strength of the filtering, and hence the responsiveness of the OIS system 104.

The value of the filter coefficient $\alpha$ (or another filter coefficient in case of another implementation of the low-pass filter 208) may as shown in Fig. 3 be determined by a filter selector block 209, responsive to the signal-to-noise estimate $SNR_i$ output by the SNR computation block 201.

The P-term, I-term, and/or D-term:

Each of these terms of the OIS controller 108 has a corresponding influence on the responsiveness of the OIS system 104. For instance, a higher value of the P-term in general results in a stronger response to the error signal $e$. However, a larger P-term may also result in overshoot and an increased steady-state error. Thus, where the P-term is comprised in the set of adjustable control parameters, it may during tuning of the control loop of the control system 210 (e.g., during the design phase of the OIS system 104) be beneficial to establish a range of values of the P-term within which the control loop meets the target stability constraints of the given implementation. Where more than one of the controller terms (i.e., the P-, I-, and D-terms) are comprised in the set of adjustable control parameters, it may correspondingly be beneficial to establish respective ranges for each of the controller terms within which their respective values can be varied independently from the other controller term(s) while meeting the target stability constraints. Alternatively, a parameter envelope may be established jointly for the adjustable controller terms within which the controller parameters may be varied jointly between a respective first and second value, so as to adapt the responsiveness of the OIS system 104 while maintaining stability. Similar considerations may apply to an adaptable filter coefficient of a low pass filter of the OIS controller 108 configured to filter the D-term.

In any case, the value(s) of any of these adjustable control parameters of the OIS controller 108 may as shown in Fig. 3 be determined by a parameter selector 211, responsive to the signal-to-noise estimate $SNR_i$ output by the SNR computation block 201.

Various combinations and/or subsets of the above-mentioned control parameters may define the set of control parameters. In the following, approaches for varying the value of a given control parameter of the set of control parameters will be discussed. Reference will hereby for simplicity mainly be made to a single "first" control parameter. It is however to be understood that the following disclosure is applicable to each of any number of control parameters of the set of control parameters, wherein the value of the respective control parameter may be adjusted by its associated selector block 207, 209 or 211. Without loss of generality, each of the approaches will for simplicity be discussed with reference to the signal-to-noise estimate $SN_i$ being specifically an SNR estimate $SNR_i$ (as output by the SNR computation block 201). However, the approaches may be used together with any of the other above-mentioned types of signal-to-noise estimates.

The first control parameter here refers to a control parameter influencing a responsiveness of the OIS system 104 to vibrational movement indicated in the motion signal $\omega$. The first value of the first control parameter may cause / be associated with a lower responsiveness by reducing a sensitivity to noise in the motion signal, reducing a rate at which the OIS system 104 tracks a displacement (e.g., angular displacement) of the camera 100 indicated in the motion signal, and/or decreasing a strength or amount of compensation applied by the OIS system 104 responsive to a displacement. Conversely, the second value of the first control parameter may cause / be associated with a higher responsiveness by increasing a sensitivity to noise in the motion signal, increasing a rate at which the OIS system 104 tracks a displacement (e.g., angular displacement) of the camera 100 indicated in the motion signal, and/or increasing an strength or amount of compensation applied by the OIS system 104 responsive to a displacement.

As shown in Fig. 4, step S302 comprises two conditional sub-steps S303 and S304 which are performed (e.g., per control parameter of the set of control parameters) in dependence on whether the current signal-to-noise ratio estimate $SN_i$ is in a lower range or an upper range. Thus, the method proceeds to step S303 responsive to determining that the current signal-to-noise ratio estimate $SN_i$ is in the lower range and accordingly sets the first control parameter to the first value (e.g., $R_{leak} = R_{leak,1}$). On the other hand, the method proceeds to step S304 responsive to determining that the current signal-to-noise ratio estimate $SN_i$ is in the upper range and accordingly sets the first control parameter to the second value responsive to determining that the SNR estimate is in an upper range (e.g., $R_{leak} = R_{leak,2}$). It is to be noted that "setting" a first control parameter to a given value may an instantaneous setting of the first control parameter to the given value (e.g., directly changing the first control parameter from the first value to the second value). But this need not be the case but "setting" is here intended to also encompass a gradual adjustment of the value of the first control parameter to the "set" value (e.g., a finite attack rate or decay rate). This may also be appreciated from the below example approaches of adapting the value of the first control parameter. In any case, the adaption of the value of the first control parameter may be effected upon each time instant an updated signal-to-noise ratio estimate $SN_i$ is determined by the SNR block 201. However, it is also possible to perform the adaption at a lower rate.

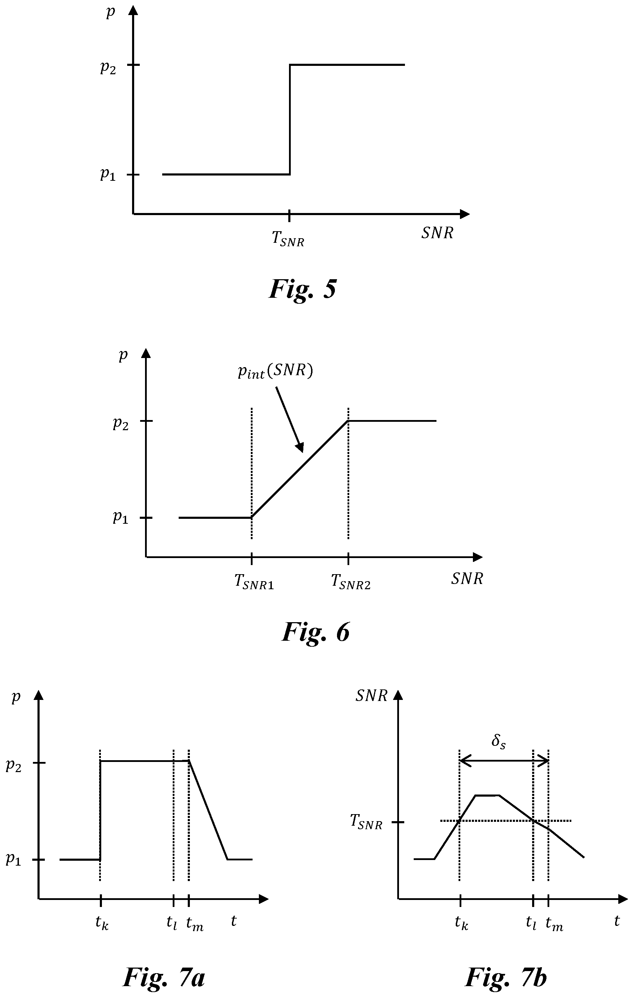

Fig. 5 is a schematic diagrammatic depiction of an example approach of determining a value (here denoted $p$) of a first control parameter. According to this approach, determining the value $p$ of the first control parameter comprises comparing the current SNR estimate $SNR_i$ to a threshold $T_{SNR}$. Thus, responsive to determining that the current SNR estimate $SNR_i$ is smaller than the threshold $T_{SNR}$ the value $p$ of the first control parameter is set to the first value $p = p_1$. Responsive to determining that the current SNR estimate $SNR_i$ is greater than (or equal to) the threshold $T_{SNR}$ the value $p$ of the first control parameter may be set to the second value $p = p_2$. Hence, as illustrated, Fig. 5 is an example of a direct setting or "switching" of a value $p$ of a first control parameter between a first and second value $p_1$ and $p_2$ employing a single threshold $T_{SNR}$. While in Fig. 5, $p_1 < p_2$ the opposite may also apply.

Fig. 6 is a schematic diagrammatic depiction of a further example approach of determining a value $p$ of a first control parameter. According to this approach, determining the value $p$ of the first control parameter comprises setting the value $p$ of the first control parameter to:

- a first value $p_1$ responsive to determining that the current SNR estimate $SNR_i$ is smaller than a first threshold $T_{SNR1}$ (corresponding to $SNR_i$ being in a lower range),
- a second value $p_2$ responsive to determining that the current SNR estimate $SNR_i$ is greater than a second threshold $T_{SNR2}$ (corresponding to $SNR_i$ being in an upper range), and
- an intermediate value $p_1 < p_{int} < p_2$ responsive to determining that the current SNR estimate $SNR_i$ is greater than the first threshold $T_{SNR1}$ and smaller than the second threshold $T_{SNR2}$ (corresponding to $SNR_i$ being in an intermediate range, between the lower and upper ranges).

The intermediate value $p_{int}$ is here determined as an increasing function of $SNR_i$ defined as a linear interpolation between $p_1$ and $p_2$. However, a non-linear interpolation is also possible. It is further noted that while in Fig. 6, $p_1 < p_2$, the opposite may also apply wherein the intermediate value $p_{int}$ instead may be determined as a decreasing function of $SNR_i$. Moreover, while Fig. 6 shows the intermediate value $p_{int}$ as a monotonically increasing function of $SNR_i$, the intermediate value $p_{int}$ may also be a step-wise increasing function of $SNR_i$ (or decreasing if $p_1 > p_2$). Furthermore, the intermediate value $p_{int}$ may be determined using a look-up table, providing a mapping between a number of signal-to-noise ratio estimates $SN_i$ between a first and second threshold, and intermediate values $p_{int}$.

As non-limiting example for the filter coefficient $\alpha$ of the low-pass filter 208, the first threshold $T_{SNR1}$ may be set to 2.0 and the second threshold $T_{SNR2}$ may be set to 100.0. If $SNR_i > T_{SNR2} : \alpha$ is set to 1 (no filtering), if $SNR_i < T_{SNR1} : \alpha$ is set to 0.2 (strong filtering), and if $T_{SNR1} < SNR_i < T_{SNR2} : \alpha$ is interpolated between 0.2 and 1 as a (linear) function of $SNR_i$.

Fig. 7a is a schematic diagrammatic depiction of a further example approach of determining a value $p$ of a first control parameter, to be described with further reference to Fig. 7b showing an example of a time-varying sequence of SNR estimates $SNR_i$ determined over a time period during which the OIS system 104 is in the active state. As shown, during an initial portion of the time period, up until the time instant $t_k$, the SNR estimates $SNR_{i<k}$ are smaller than a threshold $T_{SNR}$, wherein the value $p$ remains set to $p = p_1$. At time instant $t_k$ the SNR estimate $SNR_k > T_{SNR}$, wherein, in response, the value $p$ is set to the second value $p = p_2$, e.g., directly, corresponding to an infinite attack rate. Between the time instants $t_k$ and $t_l$ the SNR estimate $SNR_i$ remains above the threshold $T_{SNR}$. At time instant $t_l$ the SNR estimate $SNR_i$ falls below $T_{SNR}$. However, the control approach here implements a sustain period $\delta_s$ which defines a minimum duration during which the value $p$ remains set to the second value $p_2$ regardless of how the SNR estimate $SNR_i$ develops. At time instant $t_m$ sustain period $\delta_s$ has expired, wherein the value $p$ is gradually adjusted towards the first value $p_1$ at a finite release rate (also known as a decay rate). While in Fig. 7a-b, a sustain period is implemented, it is also possible to have a zero sustain period $\delta_s = 0$. Moreover, while in the illustrated example, an infinite attack rate is used, it is also possible to implement a finite attack rate for a gradual adjustment of the value $p$ towards the second value $p_2$. The finite attack rate may typically be greater than the release rate, such that the responsiveness of the OIS system 104 may be increased more rapidly in response to an increasing SNR estimate. The attack and decay rates may each be predetermined rates, tuned to achieve a desired transition between the lower and higher responsiveness states associated with the first control parameter.

Any one of the approaches discussed with reference to Fig. 5, 6 and 7a-b may be applied to any one, or each, control parameter of a set of control parameters. It is contemplated that the attack-(sustain)-release approach of Fig. 7a-b may be especially advantageous for adapting the rate of leak $R_{leak}$, for example combined with applying the approach of Fig. 6 to one or more of the P-, I- or D-terms of the OIS controller 108. This is however merely one example and other combinations are also possible.

The various operations and blocks involved in controlling an OIS system discussed herein, such as the OIS system 104, may be implemented in both hardware and software. In a software implementation, the image capturing device, e.g. the camera 100, may comprise a processing device realized in the form of one or more processors, such as one or more central processing units, which in association with computer program code instructions stored on a (non-transitory) computer-readable medium, such as a non-volatile memory, causes the processing device to carry out the method steps for controlling the OIS system. Examples of non-volatile memory include read-only memory, flash memory, ferroelectric RAM, magnetic computer storage devices, optical discs, and the like. In a hardware implementation, the processing device may instead be realized by dedicated circuitry configured to implement the method steps for controlling the OIS system. The circuitry may be in the form of one or more integrated circuits, such as one or more application specific integrated circuits (ASICs) or one or more field-programmable gate arrays (FGPAs). It is to be understood that it is also possible to have a combination of a hardware and a software implementation, meaning that some method steps may be implemented in dedicated circuitry and others in software.

The person skilled in the art realizes that the present invention by no means is limited to the examples described above. On the contrary, many modifications and variations are possible within the scope of the appended claims.

For example, where the camera 100 is a video camera, the IS system 101 as shown in each of Fig. 1-3 may further comprise (in addition to the OIS system 104 and 104', respectively) an electronic image stabilization (EIS) system or module 124. EIS may also be referred to as video image stabilization (VIS). The EIS/VIS system 124 may apply post-processing to the captured video frames F in order to compensate for residual motion remaining after compensation by the OIS system 104 and output a stabilized sequence of video frames F'. The EIS system 124 may be comprised in the above-mentioned video processing pipeline. The EIS system 124 may typically be implemented at an initial or at least early stage of the pipeline, such that subsequent post-processing may benefit from stabilization achieved by the EIS. The EIS system 124 may here be of a conventional type, for instance applying a crop to image frames, wherein the location of the crop is shifted between successive video frames to compensate for inter-frame motion. Cropping is however only one example of an EIS operation, and other types of EIS transforms may be implemented in addition, or instead. In either case, the EIS system 124 may implement at least one EIS transform being controlled based on the motion signal $m$ or, in the context of Fig. 3, the motion signal $\omega$. For example, with reference to Fig. 3, the EIS system 124 may control the size and/or the location of the crop based on the samples $\theta$. Since the samples $\theta$ are derived by filtering the motion signal $\omega$ by the filtering stage 204, the responsiveness of the cropping operation will thus depend on the values of the control parameters of the filter stage, e.g., the leak rate of the integrator 206 and/or the filter coefficient of the low pass filter 208. Thus, the SNR estimate determined by the SNR block 201 may be used to adapt the responsiveness also of the EIS system 124.

**Claims**

1. A method for controlling an image stabilization, IS, system (101) of an image capturing device (100),

    wherein the IS system (101) comprises an optical image stabilization, OIS, system (104) compensating for vibrational movement of the image capturing device based on a motion signal output by a motion sensor (102, 202) of the image capturing device (100), and
    wherein the OIS system (104) has at least a first control parameter with a value being adjustable to adapt a responsiveness of the OIS system (104) to vibrational movement, the value being adjustable between a first value causing a lower responsiveness of the OIS system (104), and a second value causing a higher responsiveness of the OIS system (104);
    the method comprising, while the OIS system (104) is in an active state and performs OIS;
    determining a signal-to-noise estimate for the motion signal; and
    determining the value of the first control parameter based on the signal-to-noise estimate, comprising setting the first control parameter to the first value responsive to determining that the signal-to-noise estimate is in a lower range, and to the second value responsive to determining that the signal-to-noise estimate is in an upper range.

2. The method according to claim 1, wherein determining the value of the first control parameter further comprises setting the first control parameter to an intermediate value between the first and second values responsive to determining that the signal-to-noise estimate is in an intermediate range, between the lower and upper ranges.

3. The method according to claim 2, wherein determining that the signal-to-noise estimate is:

    in the lower range comprises determining that the signal-to-noise estimate is smaller than a first threshold,
    in the upper range comprises determining that the signal-to-noise estimate is greater than a second threshold greater than the first threshold, and
    in the intermediate range comprises determining that the signal-to-noise estimate is between the first and second threshold.

4. The method according to any one of claims 2-3, wherein the first value is smaller than the second value and the intermediate value is an increasing function of the signal-to-noise estimate, or wherein the first value is greater than the second value and the intermediate value is a decreasing function of the signal-to-noise estimate.

5. The method according to claim 1, wherein determining that the signal-to-noise estimate is:

   in the lower range comprises determining that the signal-to-noise estimate is smaller than a threshold, and
   in the upper range comprises determining that the signal-to-noise estimate is greater than the threshold, and
   wherein determining the value of the first control parameter further comprises, subsequent to determining that the signal-to-noise estimate is greater than the threshold, setting the first control parameter to the second value, and in response to the signal-to-noise estimate subsequently being smaller than the threshold, adjusting the value of the first control parameter towards the first value at a finite release rate

6. The method according to any one of the preceding claims, wherein the motion signal indicates an angular rate of the image capturing device (100).

7. The method according to any one of the preceding claims, wherein:

   the OIS system (104) comprises a filter stage (204) arranged upstream a controller (108) of the OIS system (104) and configured to filter the motion signal output by the motion sensor (202), and
   the first control parameter is a control parameter for the filter stage (204).

8. The method according to claim 7, when dependent on claim 6, wherein the filter stage (204) comprises a leaky integrator (206), and the first control parameter is a rate of leak of the leaky integrator (206).

9. The method according to any one of claims 7-8, when dependent on claim 6, wherein the filter stage (204) comprises a low pass filter (208), and the first control parameter is a filter coefficient of the low pass filter (208).

10. The method according to any one of claims 1-6, wherein:

   the OIS system (104) comprises a controller (108) configured to compensate for vibrational movement of the image capturing device (100) by controlling a position of a movable element (118, 122) of the OIS system (104) based on the motion signal, and
   the first control parameter is a control parameter of the controller (108).

11. The method according to claim 10, wherein the controller (108) is a PID controller and the first control parameter adapts a P-term, an I-term, or a D-term of the PID controller, or a filter coefficient of a low pass filter configured to filter the D-term.

12. The method according to any one of claims, wherein the first control parameter is a control parameter of a set of control parameters of the OIS system (104), further comprising at least a second control parameter, wherein each control parameter of the set of control parameters has a respective value being adjustable to adapt the responsiveness of the OIS system (104) to vibrational movement, the respective value being adjustable between a respective first value causing a lower responsiveness of the OIS system (104), and a respective second value causing a higher responsiveness of the OIS system (104);
   the method comprising:
   for each control parameter of the set of control parameters, determining the value of the respective control parameter based on the signal-to-noise estimate, comprising setting the respective control parameter to the respective first value responsive to determining that the signal-to-noise estimate is in a respective lower range, and to the respective second value responsive to determining that the signal-to-noise estimate is in a respective upper range.

13. The method according to any one of the preceding claims, wherein the signal-to-noise estimate is a signal-to-noise ratio estimate based on an estimated variance or signal level of the motion signal, and a noise estimate for the motion signal.

14. An image capturing device comprising:

   a motion sensor (102, 202) configured to output a motion signal;

an optical image stabilization, OIS, system (104) configured to compensate for vibrational movement of the image capturing device (100) based on the motion signal,

wherein the OIS system (104) has at least a first control parameter with a value being adjustable to adapt a responsiveness of the OIS system (104) to vibrational movement, the value being adjustable between a first value causing a lower responsiveness of the OIS system (104), and a second value causing a higher responsiveness of the OIS system (104); and

a processing device configured to implement the method according to any one of the preceding claims.

15. A computer program product comprising computer program code portions configured to perform the method of any one of claims 1-13, when executed by a processing device.

**Amended claims in accordance with Rule 137(2) EPC.**

1. A method for controlling an image stabilization, IS, system (101) of an image capturing device (100),

wherein the IS system (101) comprises an optical image stabilization, OIS, system (104) compensating for vibrational movement of the image capturing device based on a motion signal output by a motion sensor (102, 202) of the image capturing device (100), wherein the motion signal indicates an angular rate of the image capturing device (100), and

wherein the OIS system (104) has at least a first control parameter with a value being adjustable to adapt a responsiveness of the OIS system (104) to vibrational movement, the value being adjustable between a first value causing a lower responsiveness of the OIS system (104), and a second value causing a higher responsiveness of the OIS system (104);

the method comprising, while the OIS system (104) is in an active state and performs OIS;

determining (S301) a current signal-to-noise estimate for the motion signal,

wherein the current signal-to-noise estimate is a signal-to-noise ratio estimate determined as a ratio of an estimated variance of a current time segment of the motion signal, and a predetermined noise estimate; and

determining (S302) the value of the first control parameter based on the current signal-to-noise estimate, comprising setting the first control parameter to the first value responsive to determining that the current signal-to-noise estimate is in a lower range (S303), and to the second value responsive to determining that the current signal-to-noise estimate is in an upper range (S304),

wherein the OIS system (104) comprises a filter stage (204) arranged upstream a controller (108) of the OIS system (104) and configured to filter the motion signal output by the motion sensor (202), wherein the filter stage (204) comprises a leaky integrator (206), and the first control parameter is a rate of leak of the leaky integrator (206).

2. The method according to claim 1, wherein determining the value of the first control parameter further comprises setting the first control parameter to an intermediate value between the first and second values responsive to determining that the signal-to-noise estimate is in an intermediate range, between the lower and upper ranges.

3. The method according to claim 2, wherein determining that the signal-to-noise estimate is:

in the lower range comprises determining that the signal-to-noise estimate is smaller than a first threshold,

in the upper range comprises determining that the signal-to-noise estimate is greater than a second threshold greater than the first threshold, and

in the intermediate range comprises determining that the signal-to-noise estimate is between the first and second threshold.

4. The method according to any one of claims 2-3, wherein the first value is smaller than the second value and the intermediate value is an increasing function of the signal-to-noise estimate, or wherein the first value is greater than the second value and the intermediate value is a decreasing function of the signal-to-noise estimate.

5. The method according to claim 1, wherein determining that the signal-to-noise estimate is:

in the lower range comprises determining that the signal-to-noise estimate is smaller than a threshold, and

in the upper range comprises determining that the signal-to-noise estimate is greater than the threshold, and

wherein determining the value of the first control parameter further comprises, subsequent to determining that the signal-to-noise estimate is greater than the threshold, setting the first control parameter to the second value, and in response to the signal-to-noise estimate subsequently being smaller than the threshold, adjusting the value of the first control parameter towards the first value at a finite release rate

6. The method according to any one of claims, wherein the first control parameter is a control parameter of a set of control parameters of the OIS system (104), further comprising at least a second control parameter, wherein each control parameter of the set of control parameters has a respective value being adjustable to adapt the responsiveness of the OIS system (104) to vibrational movement, the respective value being adjustable between a respective first value causing a lower responsiveness of the OIS system (104), and a respective second value causing a higher responsiveness of the OIS system (104);
the method comprising:
for each control parameter of the set of control parameters, determining the value of the respective control parameter based on the current signal-to-noise estimate, comprising setting the respective control parameter to the respective first value responsive to determining that the signal-to-noise estimate is in a respective lower range, and to the respective second value responsive to determining that the signal-to-noise estimate is in a respective upper range.

7. The method according to claim 6, wherein the filter stage (204) further comprises a low pass filter (208), and the set of control parameters comprises a filter coefficient of the low pass filter (208).

8. The method according to any one of the preceding claims, wherein the controller (108) is configured to compensate for vibrational movement of the image capturing device (100) by controlling a position of a movable element (118, 122) of the OIS system (104) based on the motion signal, and the set of control parameters comprises a control parameter of the controller (108).

9. The method according to claim 8, wherein the controller (108) is a PID controller and the set of control parameters comprises one or more of a P-term, an I-term, a D-term of the PID controller (108).

10. The method according to any one of the preceding claims, wherein the predetermined noise estimate is an estimated variance or an average of a time segment of the motion signal obtained while the image capturing device is stationary.

11. An image capturing device comprising:

a motion sensor (102, 202) configured to output a motion signal, wherein the motion signal indicates an angular rate of the image capturing device (100);
an optical image stabilization, OIS, system (104) configured to compensate for vibrational movement of the image capturing device (100) based on the motion signal,
wherein the OIS system (104) has at least a first control parameter with a value being adjustable to adapt a responsiveness of the OIS system (104) to vibrational movement, the value being adjustable between a first value causing a lower responsiveness of the OIS system (104), and a second value causing a higher responsiveness of the OIS system (104); and
a processing device configured to implement the method according to any one of the preceding claims,
wherein the OIS system (104) comprises a filter stage (204) arranged upstream a controller (108) of the OIS system (104) and configured to filter the motion signal output by the motion sensor (202), wherein the filter stage (204) comprises a leaky integrator (206), and the first control parameter is a rate of leak of the leaky integrator (206).

12. A computer program product comprising computer program code portions configured to perform the method of any one of claims 1-10, when executed by a processing device.

100

101

102                    106                    108                              104

┌──────────┐    m   ┌──────────┐    c   ┌──────────┐
│  Motion  │ ─────▶ │ Setpoint │ ─────▶ │   OIS    │
│  sensor  │        │controller│        │controller│
└──────────┘        └──────────┘        └──────────┘
                                              │
                 110 ┌────────┐               │  u
                     │ Driver │ ◀─────────────┤
                     └────────┘               │
                          │    ┌──────┐ 112    │  v
                          │    │ Pos. │────────┤
             114          │    │sensor│
                          ▼    └──────┘
            ┌──────────────────────┐        ┌──────────┐         F
            │  ◯      ⇕      ◯     │ ─────▶ │  Image   │ ─────▶ ▨▨▨
            │                      │        │  sensor  │
            └──────────────────────┘        └──────────┘
              116    118    120                            122

              124    m        F'
            ┌──────────┐
            │   EIS    │ ─────▶ ▨▨▨
            │  system  │
            └──────────┘

*Fig. 1*

100

101

102                        106                        108                        104'

Motion
sensor    $m$    Setpoint
controller    $c$    OIS
controller

$u$        $v$

110        Driver    Pos.
sensor    112

114                                                F

Image
sensor

116  118  120                                    122

124    $m$            F'

EIS
system

*Fig. 2*

*Fig. 3*

300

Fig. 4

**Fig. 5**

**Fig. 6**

**Fig. 7a**

**Fig. 7b**

Europäisches
Patentamt

European
Patent Office

Office européen
des brevets

# EUROPEAN SEARCH REPORT

**Application Number**

EP 24 21 8732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/280059 A1 (THIVENT DAMIEN J [US] ET AL) 28 September 2017 (2017-09-28) | 1-7, 10-15 | INV.<br>G02B27/64<br>H04N23/68 |
| Y | * abstract *<br>* figures 1, 2A-B, 3 *<br>* paragraph [0031] *<br>* paragraph [0033] - paragraph [0034] * | 8,9 | |
| X | US 2017/201683 A1 (YU WEN-HSIANG [TW]) 13 July 2017 (2017-07-13) | 1,2,4-7, 10,12-15 | |
| Y | * abstract *<br>* figures 1, 2a-b, 3 *<br>* paragraph [0027] *<br>* paragraph [0030] *<br>* paragraph [0034] - paragraph [0043] *<br>* paragraph [0052] - paragraph [0053] *<br>* paragraph [0056] * | 8,9 | |
| A | US 2019/222760 A1 (TAKEUCHI KENJI [JP]) 18 July 2019 (2019-07-18)<br>* abstract *<br>* figure 2 * | 1-15 | |
| A | US 2015/042828 A1 (WAKAMATSU NOBUSHIGE [JP]) 12 February 2015 (2015-02-12)<br>* abstract *<br>* figure 10 * | 1-15 | TECHNICAL FIELDS SEARCHED (IPC)<br><br>H04N<br>G02B<br>G03D<br>G03B |

The present search report has been drawn up for all claims

| Place of search | Date of completion of the search | Examiner |
|---|---|---|
| Munich | 22 April 2025 | Furlan, Silvano |

EPO FORM 1503 03.82 (P4C01)

## ANNEX TO THE EUROPEAN SEARCH REPORT
## ON EUROPEAN PATENT APPLICATION NO.

EP 24 21 8732

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2025

| Patent document cited in search report | Publication date | Patent family member(s) | Publication date |
|---|---|---|---|
| US 2017280059 A1 | 28-09-2017 | US 2016360111 A1<br>US 2017280059 A1 | 08-12-2016<br>28-09-2017 |
| US 2017201683 A1 | 13-07-2017 | NONE | |
| US 2019222760 A1 | 18-07-2019 | CN 110062131 A<br>CN 114584676 A<br>EP 3528491 A1<br>JP 6961500 B2<br>JP 2019124871 A<br>US 2019222760 A1 | 26-07-2019<br>03-06-2022<br>21-08-2019<br>05-11-2021<br>25-07-2019<br>18-07-2019 |
| US 2015042828 A1 | 12-02-2015 | CN 104345517 A<br>CN 107257429 A<br>JP 2015034879 A<br>US 2015042828 A1<br>US 2018041705 A1 | 11-02-2015<br>17-10-2017<br>19-02-2015<br>12-02-2015<br>08-02-2018 |

EPO FORM P0459

For more details about this annex : see Official Journal of the European Patent Office, No. 12/82